# EUROPEAN PATENT SPECIFICATION

(11) **EP 2 249 554 B1**
(45) Date of publication and mention of the grant of the patent: **06.05.2020**
(21) Application number: 09716814.0
(22) Date of filing: 03.03.2009
(51) Int. Cl.: H04M 3/56, H04M 3/42, H04M 7/00, H04L 29/06

(54) **A METHOD FOR REALIZING CHARACTERISTIC RING BACK TONE IN MULTI-PARTY SESSION**
VERFAHREN ZUR HERSTELLUNG EINES RÜCKRUFTONS IN EINER SITZUNG MIT MEHREREN PARTEIEN
PROCÉDÉ POUR RÉALISER UNE TONALITÉ DE RETOUR D'APPEL CARACTÉRISTIQUE DANS UNE SESSION À CORRESPONDANTS MULTIPLES

(30) Priority: 04.03.2008 CN 200810007345
(43) Date of publication of application: 10.11.2010
(73) Proprietor: Huawei Technologies Co., Ltd., Longgang District Shenzhen, Guangdong 518129 (CN)
(72) Inventor: LIN, Fei c/o Huawei Technologies Co., Ltd., Int. Prop.Dept., Shenzhen (CN); BAO, Yuan c/o Huawei Technologies Co., Ltd., Int. Prop.Dept., Shenzhen (CN); KE, Shanyang c/o Huawei Technologies Co., Ltd., Int. Prop.Dept., Shenzhen (CN); WANG, Haoyu c/o Huawei Technologies Co., Ltd., Int. Prop.Dept., Shenzhen (CN); HUANG, Rongjun c/o Huawei Technologies Co., Ltd., Int. Prop.Dept., Shenzhen (CN)
(74) Representative: Isarpatent
(86) International application number: PCT/CN2009/070622
(87) International publication number: WO 2009/109135

(56) References cited:
- WO-A2-2006/130783
- CN-A- 1 905 465
- CN-A- 1 972 340
- CN-A- 101 083 844
- CN-A- 101 247 437
- KR-A- 20060 046 997
- STUCKER NORTEL B: "Coping with Early Media in the Session Initiation Protocol (SIP); draft-stucker-sipping-early-media-coping-0 3.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, no. 3, 18 October 2006 (2006-10-18), XP015048561, ISSN: 0000-0004
- SIP WG SANJOY SEN JAYSHREE BHARATIA CHRIS HOGG FRANCOIS AUDET: "Early Media Issues and Scenarios; draft-sen-sip-earlymedia-01.txt", IETF STANDARD-WORKING-DRAFT, INTERNET ENGINEERING TASK FORCE, IETF, CH, no. 1, 21 November 2001 (2001-11-21), XP015035111, ISSN: 0000-0004

## Description

### FIELD OF THE TECHNOLOGY

The present invention relates to the field of mobile communications technologies, and more particularly to a method and an apparatus for implementing a personalized ring back tone in a multi-party session, a session control server, and a media resource server.

### BACKGROUND OF THE INVENTION

Internet Protocol Multimedia Subsystem Network (IMS) is a brand new multimedia service form, which can meet the current demand of terminal clients for newer and more diversified multimedia services. Currently, the IMS is considered as a core technology of a next generation network, and is also an important mode for implementing differentiated services, for example, convergence of mobile and fixed networks, and convergence of voice, data, and video.

A multimedia color ring back tone (CRBT) service over IMS refers to that in a Point to Point call, when a called user terminal rings, a calling user terminal receives an audio and/or video clip preset by the called user terminal.

In a call service in the prior art, the implementation of the multimedia CRBT service includes the following steps: A call is triggered to a CRBT server, and the CRBT server processes the session, so that the CRBT is played to the calling party during the calling procedure. Although the multimedia CRBT is realized by this technology, this technology is applicable to one-to-one sessions only, and is not applicable to multi-party sessions, especially, one-to-many sessions, such as Push to Talk over Cellular (PoC) and Shared Group.

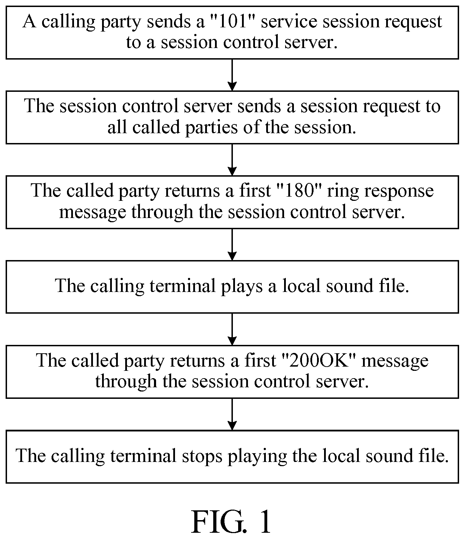

FIG. 1 is a flow chart of a procedure of establishing a multi-party session in the prior art. Referring to FIG. 1, the procedure of establishing a multi-party session in the prior art includes the following steps. A session control server sends a received "101" service session request sent by a calling party to a called party in the group of the calling party. When the called party returns a first "180" ring response message through the session control server, the calling terminal plays a local sound file, so as to indicate that the called party is ringing. When the calling party receives a first "200OK" message of the called party, the calling terminal stops playing the local sound file, and the session control server establishes a session with the called party.

However, the prior art has the following problems. The calling terminal plays the local sound file after receiving the response message of the called party, the types and number of locally provided sound files are limited, the sound file cannot be modified once being selected, and it is monotonic to play a same sound file for a long time, so that the user cannot enjoy colorful personalized ring back tones during the process of establishing the multi-party session.

KR Patent Publication No. 20060046997A discloses a method for connecting a call connecting tone service server in a call connecting tone service. In phase S227, the call connecting tone service server extracts a corresponding call connecting tone service from a terminal of the information sending end or information receiving end, and provides the corresponding call connecting tone service to the information sending end. If being set to the Manual mode, in phase S229, a ring tone signal is continuously sent through a PTT channel, and if the terminal of the information receiving end operates information receiving press key, in phase S230, a signal for terminating the call connecting tone service is identified and received from the PTT server.

Document to Stucker Nortel B: "Coping with Early media in the session initiation protocol" discloses that pre-presentation early media may allow the proxy to employ one of the proxy-side early media coping mechanisms. The proxy may inject its own SDP answer into the signalling to the originator to kick off services like colourful ring back tone (CRBT) where the originator is hearing a recording selected by the terminator while the network attempts to reach the terminating party.

Document to SIP WG SANJOY SEN JAYSHREE BHARATIA CHRIS HOGG FRANCOIS AUDET: "Early media issues and scenarios" discloses that early media is a concept of delivering a media stream prior to call answer or session establishment. Normally, early media designates a media transmission sent before the actual completion of the call. In terms of SIP, early media refers to transmission of media prior to response code 200 OK being sent to an INVITE.

WO Patent Publication No. 2006130783 A2 discloses a method for providing a call set-up triggered push content to at least one receiving party via a first telecommunication network. The method includes performing a call control function in response to a call set-up from a calling party to a called party. The call control function operates on at least one call parameter.

### SUMMARY OF THE INVENTION

A first aspect of the present invention is directed to a method for implementing a personalized ring back tone in a multi-party session, so as to overcome the disadvantages in the prior art that a ring back tone in a multi-party session is monotonic and cannot be modified. In this way, it can be effectively ensured that a user can enjoy the personalized ring back tone in the multi-party session.

According to the first aspect, the present invention provides a method for implementing a personalized ring back tone in a multi-party session, which includes the following steps:
sending, by a service session server, a session request to all called parties of the session according to a received service session request sent by a calling party; performing, by the service session server, media negotiation about the personalized ring back tone with the calling party, and establishing a media channel of the personalized ring back tone; and
receiving, by the service session server, a first ring response message, and playing the personalized ring back tone to the calling party through a media channel established through the media negotiation about the personalized ring back tone, wherein the first ring response message is sent by one of the called parties; wherein the performing the media negotiation about the personalized ring back tone with the calling party comprises: acquiring, by the service session server, a Session Description Protocol (SDP) of the personalized ring back tone; sending, by the service session server, a provisional response message carrying the SDP of the personalized ring back tone to the calling party; and receiving, by the service session server, a provisional acknowledge (PRACK) of the provisional response message from the calling party.

In the method for implementing a personalized ring back tone in a multi-party session according to the present invention, a provisional response message carrying a Session Description Protocol (SDP) of the personalized ring back tone is sent to the calling party, and the media channel of the personalized ring back tone of a network side is established with the calling party, so that a service session server plays the personalized ring back tone to the calling party in the multi-party session, when receiving the first ring response message. Therefore, the personalized ring back tone is implemented during a procedure of establishing the multi-party session.

The invention is defined by the independent claim 1. Preferred embodiments are disclosed in the dependent claims.

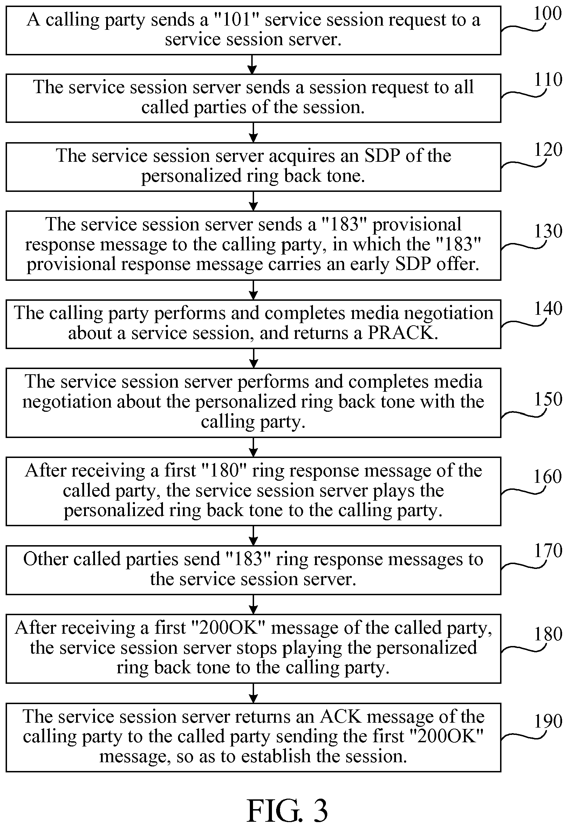

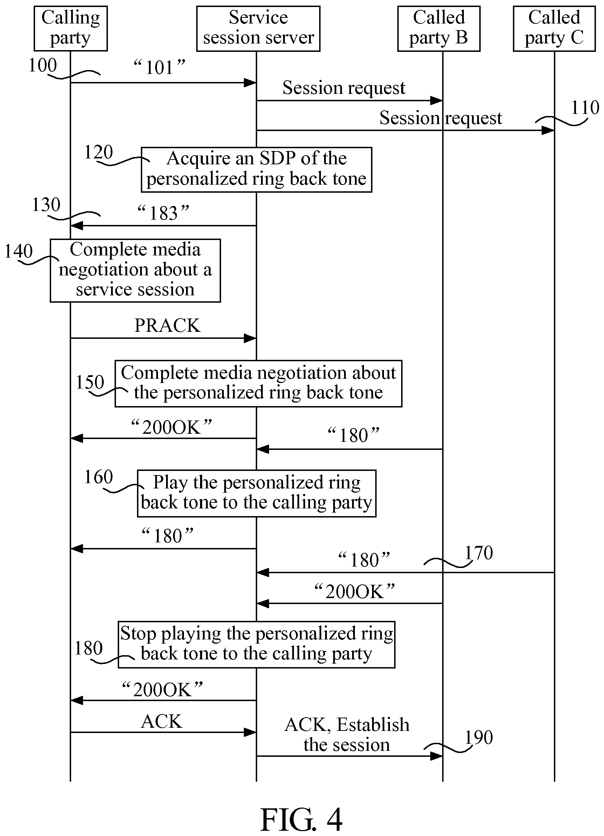

The invention is described in figures 3 and 4, and the corresponding passages of the description.

All other embodiments and/or examples of the following detailed description, do not fall under the scope of protection of the appended set of claims and are not part of the present invention.

### BRIEF DESCRIPTION OF THE DRAWINGS

FIG. 1 is a flow chart of a procedure of establishing a multi-party session in the prior art;
FIG. 2 is a flow chart of a first embodiment of a method for implementing a personalized ring back tone in a multi-party session;
FIG. 3 is a flow chart of a second embodiment of the method for implementing a personalized ring back tone in a multi-party session according to the present invention;
FIG. 4 is a block diagram of a process corresponding to FIG. 3;
FIG. 5 is a flow chart of a third embodiment of the method for implementing a personalized ring back tone in a multi-party session;
FIG. 6 is a block diagram of a process corresponding to FIG. 5;
FIG. 7 is a flow chart of a fourth embodiment of the method for implementing a personalized ring back tone in a multi-party session;
FIG. 8 is a block diagram of a process corresponding to FIG. 7;
FIG. 9 is a schematic structural view of a first embodiment of an apparatus for implementing a personalized ring back tone in a multi-party session;
FIG. 10 is a schematic structural view of a second embodiment of the apparatus for implementing a personalized ring back tone in a multi-party session;
FIG. 11 is a schematic structural view of a first embodiment of a session control server and
FIG. 12 is a schematic structural view of a first embodiment of a media resource server.

### DETAILED DESCRIPTION OF THE EMBODIMENTS

The technical solution under the present invention is elaborated below with reference to accompanying drawings and some exemplary embodiments.

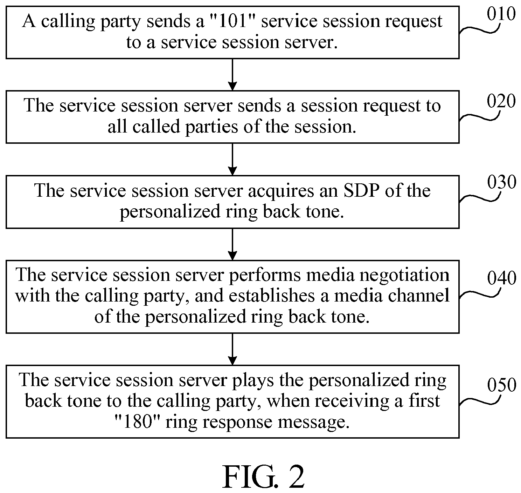

FIG. 2 is a flow chart of a first embodiment of a method for implementing a personalized ring back tone in a multi-party session. Referring to FIG. 2, the method includes the following steps.

In step 010, a calling party sends a "101" service session request to a service session server.

The service session server according to this embodiment includes a session control server and a media resource server, which may be a single entity or two entities. The service session server may be a PoC server, where a PoC service is a brand new mobile technology, and can quickly realize a "one-to-one" or "one-to-many" call, a shared group server which enables one party to share multimedia information such as video or audio with a plurality of parties at the same time, or similar multi-party service session servers.

In step 020, the service session server sends a session request to at least one called party of the session according to the received "101" service session request.

In step 030, the service session server acquires an SDP of the personalized ring back tone.

In step 040, the service session server performs media negotiation with the calling party, and establishes a media channel of the personalized ring back tone.

In step 050, the service session server plays the personalized ring back tone to the calling party, when receiving a first "180" ring response message sent by one called party.

In the method for implementing a personalized ring back tone in a multi-party session according to this embodiment, a provisional response message carrying the SDP of the personalized ring back tone is sent to the calling party, and the media channel of the personalized ring back tone of a network side is established with the calling party, so that the service session server plays the personalized ring back tone to the calling party in the multi-party session, when receiving the first ring response message. Therefore, the personalized ring back tone is implemented during a procedure of establishing the multi-party session.

FIG. 3 is a flow chart of a second embodiment of the method for implementing a personalized ring back tone in a multi-party session according to the present invention, and FIG. 4 is a block diagram of a process corresponding to FIG. 3. Referring to FIG. 3 and FIG. 4, in this embodiment, the present invention is described in detail by taking a specific server mode as an example, and the method includes the following steps.

In step 100, a calling party sends a "101" service session request to a service session server.

The service session server according to this embodiment includes a session control server and a media resource server, which may be a single entity or two entities. The service session server may be a PoC server, a shared group server which enables one party to share multimedia information such as video or audio with a plurality of parties at the same time, or similar multi-party service session servers.

In step 110, the service session server sends a session request to all called parties of the session according to the received "101" service session request.

Preferably, in the step, the session request is sent to all called parties.

In step 120, the service session server acquires an SDP of the personalized ring back tone.

In step 130, the service session server sends a "183" provisional response message to the calling party, where the "183" provisional response message carries an early SDP offer of the personalized ring back tone and an SDP answer (AS) of the session.

In this embodiment, the server mode adopts the Content-dispositions mode: media negotiation about the personalized ring back tone is conducted by adopting SPD of an early-session type.

As compared with the prior art, in step 130 of this embodiment, the "183" provisional response sent by the service session server to the calling party carries the early SDP offer of the personalized ring back tone, for establishing a media channel of the personalized ring back tone with the calling party. In the process of establishing the multi-party session in the prior art, after receiving a "180" ring response message of the called party, the calling terminal plays a local sound file, while in the present invention, in order to implement the personalized ring back tone, a media channel of the personalized ring back tone needs to be established between the calling party and a network side, so that the network side, that is, the service session server in this embodiment, can play the personalized ring back tone to the calling party.

In step 140, after receiving the "183" provisional response message, the calling party performs and completes media negotiation about a service session, and returns a Provisional Acknowledgement (PRACK) of the "183" provisional response message to the service session server, where the PRACK message carries an early-session SDP AS of the personalized ring back tone.

In this embodiment, the objective of performing media negotiation about the service session between the service session server and the calling party is to establish a media channel of the service session.

In step 150, the service session server performs and completes media negotiation about the personalized ring back tone with the calling party, and returns a "200OK" response message to the calling party.

In this embodiment, the objective of performing media negotiation about the personalized ring back tone between the service session server and the calling party is to establish a media channel for playing the personalized ring back tone, so as to play the personalized ring back tone.

In step 160, after receiving a first "180" ring response message of the called party, the service session server plays the personalized ring back tone to the calling party, and sends the "180" ring response message to the calling party.

In step 170, other called parties send "180" ring response messages to the service session server.

In step 180, after receiving a first "200OK" message of the called party, the service session server stops playing the personalized ring back tone to the calling party, and sends the first "200OK" message to the calling party.

In this embodiment, step 170 in which other called parties send the "180 ring response messages to the service session server may be performed after step 180.

In step 190, the calling party returns an acknowledgement (ACK) message, and the service session server returns the ACK message to the called party sending the first "200OK" message, so as to establish the session.

In the embodiment, steps 130-160 may also be as follows.

In step 130, when receiving a first "180" ring response message of the called party, the service session server sends a "183" or "180" provisional response message to the calling party, where the "183" or "180" provisional response message carries the early SDP offer of the personalized ring back tone and the SDP AS of the session.

In step 140, after receiving the "183" or "180" provisional response message, the calling party performs and completes media negotiation about a service session, and returns a PRACK of the "183" or "180" provisional response message to the service session server, where the PRACK message carries an early-session SDP AS of the personalized ring back tone.

In step 150, the service session server performs and completes media negotiation about the personalized ring back tone with the calling party, and returns a "200OK" message to the calling party.

In step 160, the service session server plays the personalized ring back tone to the calling party, and sends the "180" ring response message to the calling party.

In this embodiment, if a "180" provisional response message is sent to the calling party in step 130, no "180" ring response message is sent to the calling party again in step 160.

In this embodiment, the session is a multi-party session in a server mode, the media negotiation about the personalized ring back tone and the media negotiation about the service session are implemented during the process of establishing the session, and the personalized ring back tone is implemented in the multi-party session, so that the user can enjoy excellent user experience during the procedure of establishing the session.

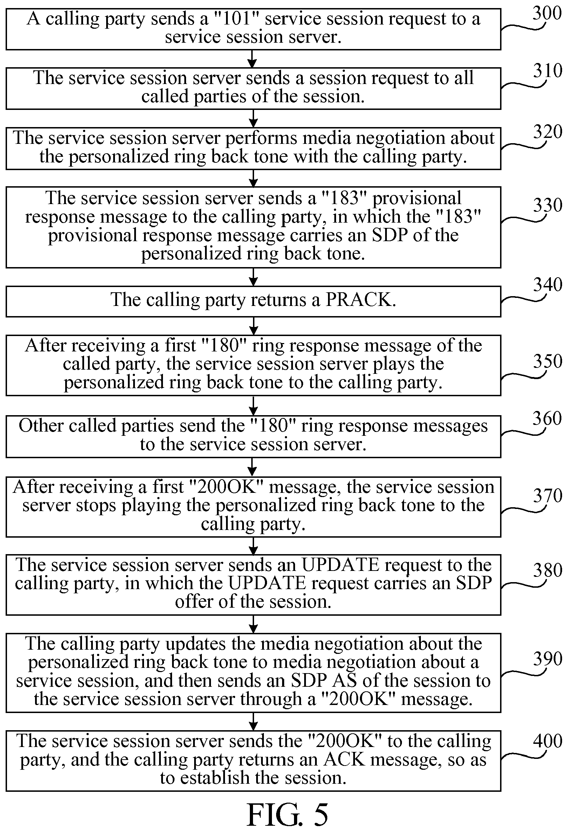

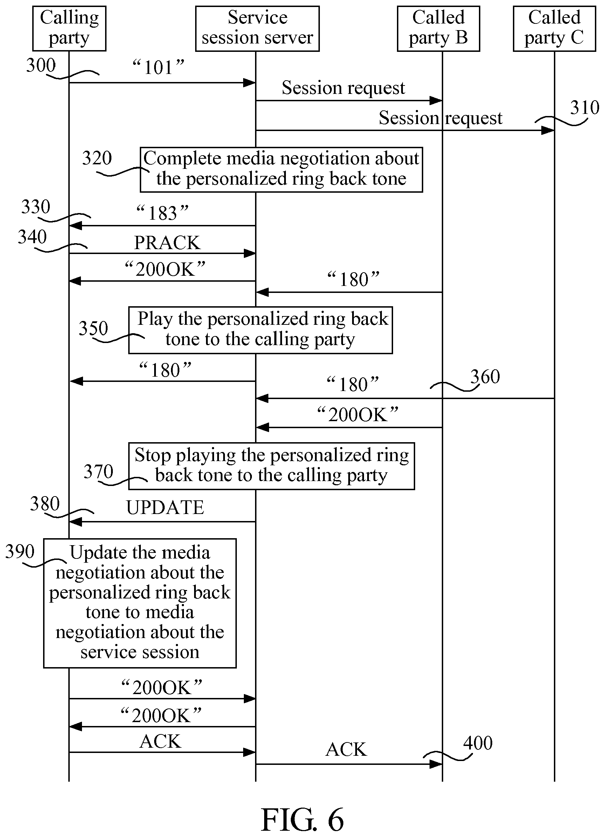

FIG. 5 is a flow chart of a third embodiment of the method for implementing a personalized ring back tone in a multi-party session, and FIG. 6 is a block diagram of a process corresponding to FIG. 5. Referring to FIG. 5 and FIG. 6, this embodiment is described in detail by taking a specific gateway mode as an example, and the method includes the following steps.

In step 300, a calling party sends a "101" service session request to a service session server.

The service session server according to this embodiment includes a session control server and a media resource server, which may be a single entity or two entities. The service session server may be a PoC server, a shared group server which enables one party to share multimedia information such as video or audio with a plurality of parties at the same time, or similar multi-party service session servers.

In step 310, the service session server sends a session request to all called parties of the session according to the received "101" service session request.

In step 320, the service session server performs and completes media negotiation about the personalized ring back tone with the calling party by using an SDP AS of the session in the service session request of the calling party as an SDP offer of the personalized ring back tone.

In step 330, the service session server sends a "183" provisional response message to the calling party, where the "183" provisional response message carries an SDP AS of the personalized ring back tone.

As compared with the prior art, in step 330 of this embodiment, the "183" provisional response sent by the service session server to the calling party carries the SDP AS of the personalized ring back tone, for establishing a media channel of the personalized ring back tone with the calling party. In the process of establishing the multi-party session in the prior art, after receiving a "180" ring response message of the called party, the calling terminal plays a local sound file, while in the present embodiment, in order to implement the personalized ring back tone, the media channel of the personalized ring back tone needs to be established between the calling party and a network side, so that the network side, that is, the service session server in this embodiment, can play the personalized ring back tone to the calling party.

In step 340, after receiving the "183" provisional response message, the calling party returns a PRACK of the "183" provisional response message to the service session server, and the service session server returns a "200OK" message to the calling party.

In step 350, after receiving a first "180" ring response message of the called party, the service session server plays the personalized ring back tone to the calling party, and sends the "180" ring response message to the calling party.

In step 360, other called parties send the "180" ring response messages to the service session server.

In step 370, after receiving a first "200OK" message of the called party, the service session server stops playing the personalized ring back tone to the calling party.

In step 380, the service session server sends an UPDATE request to the calling party, where the UPDATE request carries an SDP AS of the session.

In step 390, after receiving the UPDATE message, the calling party updates the media negotiation about the personalized ring back tone between the service session server and the calling party to media negotiation about a service session, and then sends an SDP AS of the session to the service session server through a "200OK" message.

In step 400, the service session server sends the "200OK" to the calling party, and the calling party returns an ACK message, so as to establish the session.

In the embodiment, steps 330-350 may also be as follows.

In step 330, when receiving a first "180" ring response message of the called party, the service session server sends a "183" or "180" provisional response message to the calling party, where the "183" or "180" provisional response message carries an SDP of the personalized ring back tone.

In step 340, after receiving the "183" provisional response message, the calling party performs and completes media negotiation about the personalized ring back tone, and returns a PRACK of the "183" provisional response message to the service session server.

In step 350, the service session server returns a "200OK" message to the calling party, plays the personalized ring back tone to the calling party, and sends the "180" ring response message to the calling party.

In this embodiment, if a "180" provisional response message is sent to the calling party in step 330, no "180" ring response message is sent to the calling party again in step 350.

In this embodiment, the session is a multi-party session in a gateway mode, the media negotiation about the personalized ring back tone and the media negotiation about the service session are implemented during the process of establishing the session, and the personalized ring back tone is implemented in the multi-party session, so that the user can enjoy excellent user experience during the process of establishing the session.

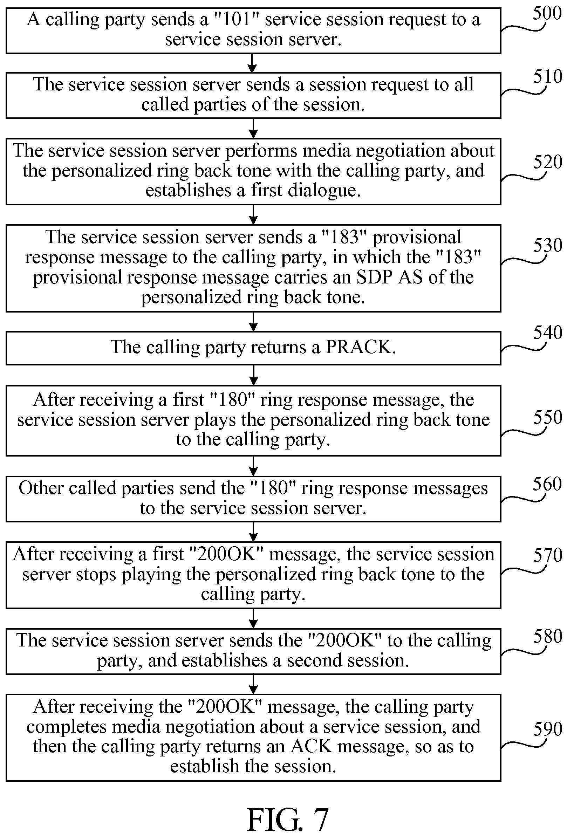

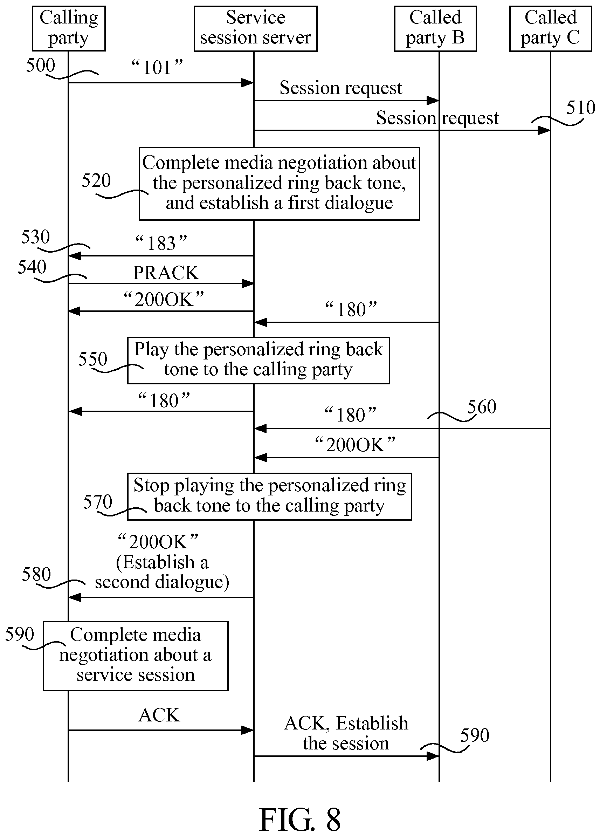

FIG. 7 is a flow chart of a fourth embodiment of the method for implementing a personalized ring back tone in a multi-party session, and FIG. 8 is a block diagram of a process corresponding to FIG. 7. Referring to FIG. 7 and FIG. 8 this embodiment is described in detail by taking a specific Forking mode as an example, and the method includes the following steps.

In step 500, a calling party sends a "101" service session request to a service session server.

The service session server according to this embodiment includes a session control server and a media resource server, which may be a single entity or two entities. The service session server may be a PoC server, a shared group server which enables one party to share multimedia information such as video or audio with a plurality of parties at the same time, or similar multi-party service session servers.

In step 510, the service session server sends a session request to all called parties of the session according to the received "101" service session request.

In step 520, the service session server completes media negotiation about the personalized ring back tone with the calling party by using an SDP AS of the session in the service session request of the calling party as an SDP offer of the personalized ring back tone, and establishes a first dialogue with the calling party.

In step 530, the service session server sends a "183" or "180" provisional response message to the calling party, where the "183" or "180" provisional response message carries an SDP AS of the personalized ring back tone.

As compared with the prior art, in step 530 of this embodiment, the "183" provisional response sent by the service session server to the calling party carries the SDP AS of the personalized ring back tone, for establishing a media channel of the personalized ring back tone with the calling party. In the process of establishing the multi-party session in the prior art, after receiving a "180" ring response message of the called party, the calling terminal plays a local sound file, while in the present embodiment, in order to implement the personalized ring back tone, the media channel of the personalized ring back tone may be established between the calling party and a network side, so that the network side, that is, the service session server in this embodiment, can play the personalized ring back tone to the calling party.

In step 540, after receiving the "183" or "180" provisional response message, the calling party returns a PRACK of the "183" or "180" provisional response message to the service session server, and the service session server returns a "200OK" message to the calling party.

In step 550, after receiving a first "180" ring response message of the called party, the service session server plays the personalized ring back tone to the calling party, and sends the "180" ring response message to the calling party.

In this embodiment, if a "180" provisional response message is sent to the calling party in step 530, no "180" ring response message is sent to the calling party again in step 550.

In step 560, other called parties send the "180" ring response messages to the service session server.

In step 570, after receiving a first "200OK" response of the called party, the service session server stops playing the personalized ring back tone to the calling party.

In step 580, the service session server sends the "200OK" response to the calling party server, where the "200OK" response carries an SDP AS of the session. The "200OK" response and the "183" provisional response message sent to the calling party have different to-tags, and belong to different dialogues. The dialogue is a second dialogue established between the service session server and the calling party.

In step 590, after receiving the "200OK" message, the calling party completes media negotiation about a service session, and then the calling party returns an ACK message, so as to establish the session.

In the embodiment, steps 530-550 may also be as follows.

In step 530, when receiving a first "180" ring response message of the called party, the service session server sends a "183" or "180" provisional response message to the calling party, where the "183" or "180" provisional response message carries an SDP of the personalized ring back tone.

In step 540, after receiving the "183" or "180" provisional response message, the calling party returns a PRACK of the "183" or "180" provisional response message to the service session server, and the service session server returns a "200OK" message to the calling party.

In step 550, the service session server plays the personalized ring back tone to the calling party, and sends the "180" ring response message to the calling party.

In this embodiment, if a "180" provisional response message is sent to the calling party in step 530, no "180" ring response message is sent to the calling party again in step 550.

In this embodiment, the session is a multi-party session in a Forking mode, the media negotiation about the personalized ring back tone and the media negotiation about the service session are implemented during the process of establishing the session, and the personalized ring back tone is implemented in the multi-party session, so that the user can enjoy excellent user experience during the procedure of establishing the session.

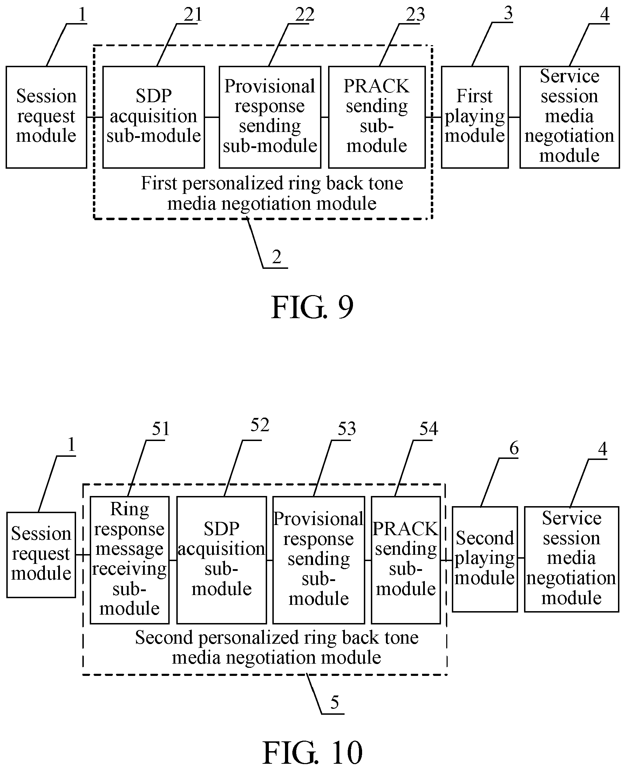

FIG. 9 is a schematic structural view of a first embodiment of an apparatus for implementing a personalized ring back tone in a multi-party session. Referring to FIG. 9, the apparatus according to this embodiment includes a session request module 1, a first personalized ring back tone media negotiation module 2, and a first playing module 3.

The session request module 1 is configured to send a session request to at least one called party of the session according to a received service session request sent by a calling party.

The first personalized ring back tone media negotiation module 2 is configured to perform media negotiation about the personalized ring back tone with the calling party.

The first playing module 3 is configured to play the personalized ring back tone to the calling party through a media channel established through the media negotiation about the personalized ring back tone, when receiving a first ring response message, where the first ring response message is sent by one of the called parties.

Preferably, the first personalized ring back tone media negotiation module 2 in this embodiment further includes an SDP acquisition sub-module 21, a provisional response sending sub-module 22, and a PRACK sending sub-module 23.

The SDP acquisition sub-module 21 is configured to acquire an SDP of the personalized ring back tone.

The provisional response sending sub-module 22 is configured to send a provisional response message carrying the SDP of the personalized ring back tone to the calling party.

The PRACK sending sub-module 23 is configured to enable the calling party to return a PRACK of the provisional response message.

Preferably, the apparatus according to this embodiment further includes a service session media negotiation module 4, configured to perform media negotiation about a service session with the calling party before or after receiving a first ACK response message.

In this embodiment, the first personalized ring back tone media negotiation module is set to establish the media channel of the personalized ring back tone of a network side with the calling party, so that the user can enjoy colorful personalized ring back tones during the procedure of establishing the multi-party session.

FIG. 10 is a schematic structural view of a second embodiment of the apparatus for implementing a personalized ring back tone in a multi-party session. Referring to FIG. 10, the apparatus according to this embodiment includes a session request module 1, a second personalized ring back tone media negotiation module 5, and a second playing module 6.

The session request module 1 is configured to send a session request to at least one called party of the session according to a received service session request sent by a calling party.

The second personalized ring back tone media negotiation module 5 is configured to perform media negotiation about the personalized ring back tone with the calling party, when receiving a first ring response message, where the first ring response message is sent by one of the called parties.

The second playing module 6 is configured to play the personalized ring back tone to the calling party through a media channel established through the media negotiation about the personalized ring back tone.

Preferably, the second personalized ring back tone media negotiation module 5 in this embodiment includes a ring response message receiving sub-module 51, an SDP acquisition sub-module 52, a provisional response sending sub-module 53, and a PRACK sending sub-module 54.

The ring response message receiving sub-module 51 is configured to receive the first ring response message, where the first ring response message is sent by one of the called parties.

The SDP acquisition sub-module 52 is configured to acquire an SDP of the personalized ring back tone.

The provisional response sending sub-module 53 is configured to send a provisional response message carrying the SDP of the personalized ring back tone to the calling party.

The PRACK sending sub-module 54 is configured to enable the calling party to return a PRACK of the provisional response message.

Preferably, the apparatus according to this embodiment further includes a service session media negotiation module 4, configured to perform media negotiation about a service session with the calling party before or after receiving a first ACK response message.

In this embodiment, the second personalized ring back tone media negotiation module is set to establish the media channel of the personalized ring back tone of a network side with the calling party, so that the user can enjoy colorful personalized ring back tones during the procedure of establishing the multi-party session.

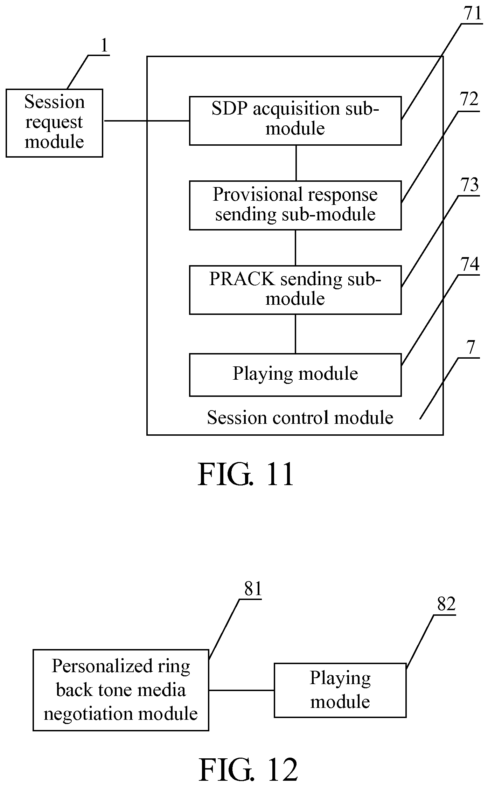

FIG. 11 is a schematic structural view of a first embodiment of a session control server. Referring to FIG. 11, the session control server according to this embodiment includes a session request module 1 and a session control module 7.

The session request module 1 is configured to send a session request to at least one called party of a session according to a received service session request sent by a calling party.

The session control module 7 is configured to indicate to perform media negotiation about a personalized ring back tone during a procedure of establishing the session according to the received service session request sent by the calling party, and indicate to play the personalized ring back tone when receiving a first ring response message.

Further, the session control module 7 includes an SDP acquisition sub-module 71, a provisional response sending sub-module 72, a PRACK sending sub-module 73, and a playing module 74.

The SDP acquisition sub-module 71 is configured to acquire an SDP of the personalized ring back tone.

The provisional response sending sub-module 72 is configured to send a provisional response message carrying the SDP of the personalized ring back tone to the calling party.

The PRACK sending sub-module 73 is configured to enable the calling party to return a PRACK of the provisional response message.

The playing module 74 is configured to indicate, when receiving the first ring response message, to play the personalized ring back tone to the calling party.

Functions of each specific module of the session control server have been described in detail in the aforementioned description, so that the details will not be described in detail herein again.

FIG. 12 is a schematic structural view of a first embodiment of a media resource server. Referring to FIG. 12, the media resource server according to this embodiment includes a personalized ring back tone media negotiation module 81 and a playing module 82.

The personalized ring back tone media negotiation module 81 is configured to perform media negotiation about a personalized ring back tone with a calling party.

The playing module 82 is configured to play the personalized ring back tone to the calling party through a media channel established through the media negotiation about the personalized ring back tone, when receiving a first ring response message, where the first ring response message is sent by one of the called parties.

Functions of each specific module of the media resource server have been described in detail in the aforementioned description, so that the details will not be described in detail herein again.

Persons of ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read-Only Memory (ROM), a Random Access Memory (RAM), a magnetic disk, or a Compact Disk Read-Only Memory (CD-ROM).

It should be noted that the above embodiments are merely provided for elaborating the technical solutions of the present invention, but not intended to limit the present invention.

Persons of ordinary skill in the art may understand that information, messages, and signals may be represented by using any one of many different techniques and technologies. For example, the messages and the information in the aforementioned description may be represented as voltages, currents, electromagnetic waves, magnetic fields or magnetic particles, optical fields, or a combination thereof.

## Claims

1. A method for implementing a personalized ring back tone in a multi-party session in an Internet Protocol Multimedia Subsystem Network, comprising:
sending (110), by a service session server, a session request to all called parties of the multi-party session according to a received service session request (100) sent by a calling party;
performing, by the service session server, media negotiation about the personalized ring back tone with the calling party, and establishing a media channel of the personalized ring back tone; and
receiving (160), by the service session server, a first ring response message, and playing the personalized ring back tone to the calling party through a media channel established through the media negotiation about the personalized ring back tone, wherein the first ring response message is sent by one of the called parties; wherein performing by the service session server, media negotiation about the personalized ring back tone with the calling party comprises:
acquiring (120), by the service session server, a Session Description Protocol, SDP, of the personalized ring back tone;
sending (130), by the service session server, a provisional response message carrying the SDP of the personalized ring back tone to the calling party; and
receiving (140), by the service session server, a provisional acknowledgement, PRACK, of the provisional response message from the calling party.

2. The method for implementing a personalized ring back tone in a multi-party session according to claim 1, further comprising:
stopping playing the personalized ring back tone to the calling party, according to a first acknowledgement, ACK, response message received, wherein the first ACK response message is sent by one of the called parties.

3. The method for implementing a personalized ring back tone in a multi-party session according to claim 2, further comprising:
performing media negotiation about a service session with the calling party before or after receiving the first ACK response message.

4. The method for implementing a personalized ring back tone in a multi-party session according to claim 1, wherein the service session request is a Push-To-Talk over Cellular, PoC, service request.

## Patentansprüche

1. Verfahren zum Implementieren eines personalisierten Rückruftons in einer Mehrparteisitzung in einem Internetprotokoll-Multimedia-Subsystemnetzwerk, umfassend:
Senden (110), durch einen Dienstsitzungsserver, einer Sitzungsanforderung zu allen angerufenen Parteien der Mehrparteisitzung gemäß einer empfangenen Dienstsitzungsanforderung (100), die durch eine anrufende Partei gesendet wird;
Durchführen, durch den Dienstsitzungsserver, einer Medienverhandlung über den personalisierten Rückrufton mit der anrufenden Partei und Erstellen eines Medienkanals des personalisierten Rückruftons; und
Empfangen (160), durch den Dienstsitzungsserver, einer ersten Klingeln-Antwortnachricht und Abspielen des personalisierten Rückruftons zu der anrufenden Partei über einen mittels der Medienverhandlung über den personalisierten Rückrufton erstellten Medienkanal, wobei die erste Klingeln-Antwortnachricht durch eine der angerufenen Parteien gesendet wird; wobei das Durchführen, durch den Dienstsitzungsserver, einer Medienverhandlung über den personalisierten Rückrufton mit der anrufenden Partei Folgendes umfasst:
Erfassen (120), durch den Dienstsitzungsserver, eines Sitzungsbeschreibungsprotokolls bzw. SDP des personalisierten Rückruftons;
Senden (130), durch den Dienstsitzungsserver, einer vorläufigen Antwortnachricht, die das SDP des personalisierten Rückruftons zu der anrufenden Partei führt; und
Empfangen (140), durch den Dienstsitzungsserver, einer vorläufigen Bestätigung bzw. PRACK der vorläufigen Antwortnachricht von der anrufenden Partei.

2. Verfahren zum Implementieren eines personalisierten Rückruftons in einer Mehrparteisitzung nach Anspruch 1, ferner umfassend:
Stoppen des Abspielens des personalisierten Rückruftons zu der anrufenden Partei gemäß einer ersten empfangenen Bestätigungs- bzw. ACK-Antwortnachricht, wobei die erste ACK-Antwortnachricht durch eine der angerufenen Parteien gesendet wird.

3. Verfahren zum Implementieren eines personalisierten Rückruftons in einer Mehrparteisitzung nach Anspruch 2, ferner umfassend:
Durchführen einer Medienverhandlung über eine Dienstsitzung mit der anrufenden Partei vor oder nach dem Empfang der ersten ACK-Antwortnachricht.

4. Verfahren zum Implementieren eines personalisierten Rückruftons in einer Mehrparteisitzung nach Anspruch 1, wobei die Dienstsitzungsanforderung eine "Push-To-Talk over Cellular"- bzw. PoC-Dienstanforderung ist.

## Revendications

1. Procédé pour mettre en œuvre une tonalité de retour d'appel personnalisée dans une session à abonnés multiples dans un réseau de sous-système multimédia à protocole Internet, comprenant :
l'envoi (110), par un serveur de session de service, d'une demande de session à tous les abonnés appelés de la session à abonnés multiples selon une demande de session de service reçue (100) envoyée par un abonné appelant ;
la réalisation, par le serveur de session de service, d'une négociation multimédia en ce qui concerne la tonalité de retour d'appel personnalisée avec l'abonné appelant, et l'établissement d'un canal multimédia de la tonalité de retour d'appel personnalisée ; et
la réception (160), par le serveur de session de service, d'un premier message de réponse de sonnerie, et la lecture de la tonalité de retour d'appel personnalisée, pour l'abonné appelant, par l'intermédiaire d'un canal multimédia établi par le biais de la négociation multimédia en ce qui concerne la tonalité de retour d'appel personnalisée, dans lequel le premier message de réponse de sonnerie est envoyé par un des abonnés appelés ; dans lequel la réalisation, par le serveur de session de service, d'une négociation multimédia en ce qui concerne la tonalité de retour d'appel personnalisée avec l'abonné appelant comprend :
l'acquisition (120), par le serveur de session de service, d'un protocole de description de session, SDP, de la tonalité de retour d'appel personnalisée ;
l'envoi (130), par le serveur de session de service, d'un message de réponse provisionnel portant le SDP de la tonalité de retour d'appel personnalisée à l'abonné appelant ; et
la réception (140), par le serveur de session de service, d'un accusé de réception provisionnel, PRACK, du message de réponse provisionnel à partir de l'abonné appelant.

2. Procédé pour mettre en œuvre une tonalité de retour d'appel personnalisée dans une session à abonnés multiples selon la revendication 1, comprenant en outre :
l'arrêt de la lecture de la tonalité de retour d'appel personnalisée, pour l'abonné appelant, selon un premier message de réponse d'accusé de réception, ACK, reçu, dans lequel le premier message de réponse d'ACK est envoyé par un des abonnés appelés.

3. Procédé pour mettre en œuvre une tonalité de retour d'appel personnalisée dans une session à abonnés multiples selon la revendication 2, comprenant en outre :
la réalisation d'une négociation multimédia en ce qui concerne une session de service avec l'abonné appelant avant ou après la réception du premier message de réponse d'ACK.

4. Procédé pour mettre en œuvre une tonalité de retour d'appel personnalisée dans une session à abonnés multiples selon la revendication 1, dans lequel la demande de session de service est une demande de service de messagerie vocale instantanée, PoC.
